Europäisches Patentamt

European Patent Office

Office européen des brevets

(19)

(11) Numéro de publication : **0 030 229**
**B1**

(12) FASCICULE DE BREVET EUROPÉEN

(45) Date de publication du fascicule du brevet :
16.11.83

(51) Int. Cl.³ : **H 01 G 4/18, B 32 B 15/08**

(21) Numéro de dépôt : 81200152.7

(22) Date de dépôt : 26.09.78

(60) Numéro de publication de la demande initiale en
application de l'article 76 CBE : 0001525

(54) Film plastique orienté biaxialement et métallisé.

(30) Priorité : 05.10.77 FR 7729986

(43) Date de publication de la demande :
10.06.81 Bulletin 81/23

(45) Mention de la délivrance du brevet :
16.11.83 Bulletin 83/46

(84) Etats contractants désignés :
BE CH DE GB LU NL SE

(56) Documents cités :
FR A 2 287 093
GB A 1 169 038
GB A 1 250 450
US A 3 808 304

(73) Titulaire : Société Chimique des Charbonnages
Tour Aurore Place des Reflets Cedex no 5
F-92080 Paris La Défense 2 (FR)

THOMSON-CSF
173, Boulevard Haussmann
F-75379 Paris Cedex 08 (FR)

(72) Inventeur : Decroix, Jean-Yves
28, Place des Héros
F-62000 Arras (FR)
Inventeur : Seytre, Gérard
33, Boulevard de l'Europe
F-69110 Sainte-Foy-Les-Lyon (FR)
Inventeur : Charlot, Pierre
4, Avenue de Bourgogne
F-21800 Quetigny (FR)
Inventeur : Dubois, Jean-Claude
65, Avenue Nicolas Ledoux
F-78780 Cressely/S.Remy Les-Chevreuse (FR)

(74) Mandataire : Dubost, Thierry
Société Chimique des Charbonnages Service Propriété Industrielle B.P. No 1
F-62160 Bully Les Mines (FR)

Jouve, 18, rue St-Denis, 75001 Paris, France

EP 0 030 229 B1

# 0 030 229

## Film plastique orienté biaxialement et métallisé

L'invention a pour objet un film plastique orienté biaxialement et métallisé utile notamment pour la fabrication de condensateurs.

Depuis de nombreuses années, l'industrie électrique est à la recherche de condensateurs présentant un ensemble de caractéristiques favorables en ce qui concerne la fiabilité, les propriétés diélectriques, la tenue à la température et le prix de revient. Pour les condensateurs réalisés à partir de films plastiques on a fait appel entre autres au polystyrène, dont les films ne sont pas métallisables, puis au polypropylène dont les films sont aisés à bobiner, peu sensibles à l'humidité et très faciles à métalliser.

Les films de polypropylène, métallisés ou non, ne sont déjà largement implantés comme diélectrique de condensateurs dans de nombreuses applications avec ou sans imprégnant. Cependant ces films possèdent la particularité que l'amplitude de variation de la capacité des condensateurs en fonction de la température est très élevée. Ceci ne permet pas la compensation thermique des variations d'inductance de matériaux du type ferrite doux, dont le coefficient de température est bien déterminé et égal à 120 parties par million (p.p.m.) par degré Celsius. En conséquence cette particularité ne permet pas d'utiliser les films de polypropylène pour la fabrication de certains types de condensateurs, notamment ceux présents dans les filtres et particulièrement les filtres de voies téléphoniques.

Pour exposer de manière plus détaillée le problème auquel la présente invention apporte une solution, on rappelle que le coefficient de température $K\theta$ d'un condensateur est défini comme la variation relative de la capacité en fonction de la variation de température : $K\theta = \Delta C/C/\Delta\theta$.

Pour compenser thermiquement les variations d'inductance des ferrites doux, on recherche donc un matériau dont le coefficient de température soit aussi proche que possible de $- 120$ ppm/°C. Cependant il faut aussi prendre en compte le fait que le coefficient de température d'un matériau n'est pas uniforme dans toute la gamme des températures auxquelles un condensateur peut se trouver soumis, allant généralement de $- 55\,°C$ à $+ 100\,°C$. Ainsi le polystyrène possède un coefficient de température de $- 120$ ppm/°C constant de $- 55\,°C$ à $+ 75\,°C$, mais il n'est plus utilisable aux températures supérieures à 75 °C, n'est pas métallisable et impose donc l'emploi de feuilles métalliques pour former les électrodes du condensateur, ce qui accroît considérablement le volume dudit condensateur. Par contre le polypropylène possède la particularité d'une importante discontinuité de son coefficient de température selon le domaine de température envisagé :

$K\theta_1 = - 110$ ppm/°C de $- 55\,°C$ à $+ 40\,°C$

$K\theta_2 = - 340$ ppm/°C de $+ 60\,°C$ à $+ 100\,°C$.

Un objet de la présente invention est donc de mettre au point des films plastiques métallisables utiles comme diélectrique de condensateurs, présentant une variation de leur coefficient de température entre $- 55\,°C$ et $+ 100\,°C$ qui soit notablement moins importante que celle des films de polypropylène, et présentant les faibles pertes diélectriques nécessaires pour la réalisation de circuits à forte surtension. Une solution à ce problème a été apportée par le brevet français n° 2 287 093 décrivant des films biétirés en copolymères de propylène et d'éthylvinyléther, la teneur de ce dernier étant comprise entre 0,2 et 1,5 %. Toutefois cette solution fait appel à des polymères spéciaux qui ne sont pas commercialisés à l'heure actuelle. C'est pourquoi il a paru plus simple et plus économique de rechercher une solution industrielle dans le mélange de matières plastiques déjà commercialisées.

La présente invention concerne donc un film orienté biaxialement constitué d'un mélange comprenant moins de 80 % en poids de polypropylène isotactique et plus de 20 % en poids de polybutène-1 isotactique, revêtu d'une couche de métal obtenue par dépôt sous vide. Des films orientés biaxialement constitués de mélanges de polypropylène isotactique et polybutène-1 isotactique sont connus du brevet US-A-3 808 304. L'invention n'est pas limitée à une méthode particulière d'orientation de tels mélanges, dont des exemples ont été décrits dans les brevets US-A-3 808 304 et 3 849 520. Il est important cependant que le mélange de polymères destiné à être orienté soit un mélange pratiquement homogène. On peut obtenir ce résultat, par exemple, en malaxant les constituants dans un malaxeur chauffé à deux cylindres, tournant à des vitesses différentes, ou dans un appareil similaire pour mélanger les polymères, tels qu'un malaxeur de Banbury. Aux résines du mélange peuvent être ajoutés des adjuvants classiques utilisés habituellement lors de l'extrusion de films plastiques : lubrifiants, stabilisants thermiques, antioxydants, stabilisants aux rayons ultraviolets, etc...

Grâce aux caractéristiques mécaniques respectives du polypropylène et du polybutène-1, il est possible de fabriquer des films ayant une épaisseur quelconque entre 2 et 25 $\mu$m (microns). De tels films sont aisément métallisables par dépôt d'un métal — tel qu'aluminium ou zinc — sous vide sur une épaisseur de quelques centièmes de $\mu$m (microns) selon les techniques habituelles connues. Enfin leurs pertes diélectriques sont faibles.

Les condensateurs diélectriques fabriqués à partir des films métallisés selon l'invention sont remarquables par le fait que leur coefficient de température entre $- 55\,°C$ et $+ 100\,°C$ varie notablement moins que celui des condensateurs réalisés à partir de films en polypropylène. Pour des besoins de clarté, on a choisi d'exprimer quantitativement cette variation par la différence $\Delta K = K\theta_1 - K\theta_2$, étant précisé que $K\theta_1$ désigne le coefficient de température dans le domaine allant de $- 55\,°C$ à $+ 40\,°C$ et que $K\theta_2$ désigne le coefficient de température allant de $+ 60\,°C$ à $+ 100\,°C$. Ainsi selon les données fournies plus haut, ΔK vaut 230 ppm/°C pour le polypropylène. Par contre ΔK vaut entre 50 et 120 ppm/°C pour les condensateurs selon l'invention. De plus, la constante diélectrique de ces condensateurs est égale à celle des condensateurs en polypropylène et leur tangente d'angle de pertes n'est pas sensiblement modifiée dans un large domaine de fréquences.

Dans la demande initiale EP-A-1 525 il est revendiqué un condensateur électrique comprenant des électrodes conductrices et un diélectrique placé entre les électrodes, ledit diélectrique comprenant un film orienté biaxialement réalisé à partir d'un mélange comprenant moins de 80 % en poids de polypropylène isotactique et plus de 20 % en poids de polybutène isotactique, ainsi qu'un procédé pour la fabrication d'un tel condensateur.

Les films constituant le diélectrique portant une métallisation sont enroulés sur un mandrin cylindrique qui peut être retiré ou non du cylindre ainsi obtenu, lorsqu'on a réalisé la valeur de capacité désirée. Le blocage du film extérieur peut se faire par diverses méthodes, la plus répandue consistant à souder thermiquement le film extérieur de diélectrique sur lui-même.

Les métallisations constituant les électrodes, sont généralement disposées de façon à présenter une largeur plus faible que celle des films diélectriques et sont généralement décalées par rapport à ceux-ci, dans la dimension longitudinale du cylindre, de façon à ce que les extrémités du cylindre portent automatiquement les parties métalliques.

Chaque électrode est ensuite reliée à un fil métallique (par exemple cuivre étamé, etc...) par projection d'un alliage en fusion sur les extrémités du cylindre. Cette opération est communément appelée « shoopage ». C'est sur ce shoopage que sont soudés les fils de connexions.

Après bobinage et avant soudure des fils de liaisons, les cylindres de condensateurs obtenus sont traités thermiquement de façon à les stabiliser mécaniquement et électriquement.

De même on peut obtenir des condensateurs de forme parallèlépipède en constituant à partir d'un film métallisé selon l'invention des bandes, circulaires ou non, composées d'un grand nombre de couches puis en les découpant pour obtenir la forme voulue.

La protection climatique et mécanique des condensateurs peut se faire suivant différentes variantes, par exemple :
— enrubannage avec des rubans adhésifs et coulage de résine époxy ou autres produits diélectriques aux extrémités,
— moulage,
— mise en boitiers plastiques ou métalliques et coulage de résine époxy.

Des contrôles électriques sont effectués durant le processus d'élaboration du condensateur et au stade final de fabrication sur les éléments pris unitairement.

L'invention sera mieux comprise à la lecture des exemples non limitatifs suivants :

## Exemples 1 à 9

On prépare des éprouvettes de mesure par coprécipitation de mélanges de polypropylène isotactique PP et de polybutène-1 isotactique PB dans les proportions en poids indiquées au tableau ci-après, après solubilisation dans le toluène à chaud. Ces éprouvettes de mesure sont mises en œuvre par moulage par compression sous vide primaire afin d'éviter tout problème d'oxydation. Les films ainsi obtenus, dont l'épaisseur est de l'ordre de 150 μm (microns), sont métallisés à l'aluminium selon la technique conventionnelle. Les caractéristiques électriques des films métallisés sont déterminées dans une cellule pouvant être mise sous vide secondaire, dans la gamme des fréquences comprises entre 20 HZ et 20 KHZ et dans le domaine des températures comprises entre − 55 °C et + 100 °C. Dans la gamme de températures et de fréquences étudiée, l'ensemble des mélanges présente un pic de relaxation unique attribuable à la transition vitreuse et indiquant une bonne compatibilité des mélanges en phase amorphe. On mesure ainsi :
— la constante diélectrique à 1 KHZ et 40 °C,
— la tangente d'angle de pertes tg $\delta_1 \cdot 10^{-4}$ à 1 KHZ et 60 °C,
— la tangente d'angle de pertes tg $\delta_2 \cdot 10^{-4}$ au maximum du pic de relaxation,
— le coefficient de température $K\theta_1$ entre − 55 °C et + 40 °C, exprimé en ppm/°C.
— le coefficient de température $K\theta_2$ entre + 60 °C et 100 °C, exprimé en ppm/°C.

Tous ces résultats sont rassemblés dans le tableau ci-après, dans lequel on a aussi indiqué la caractéristique ΔK calculée selon la formule $\Delta K = K\theta_1 - K\theta_2$. On comprendra donc que les exemples 1 et 2 sont donnés à titre comparatif tandis que les exemples 3 à 9 illustrent l'invention. Des mesures similaires ont été effectuées sur des films métallisés orientés biaxialement et ayant une épaisseur d'environ 5 μm (microns) ; elles ont conduit aux mêmes résultats des propriétés électriques susmentionnées dans toute la gamme des mélanges.

(Siehe Tabelle Seite 4 f.)

| EXEMPLE | % PP | % PB | $\varepsilon$ | $\text{tg }\delta_1 \cdot 10^{-4}$ | $\text{tg }\delta_2 \cdot 10^{-4}$ | $K\theta_1$ | $K\theta_2$ | $\Delta K$ |
|---|---|---|---|---|---|---|---|---|
| 1 | 100 | 0 | 2,48 | 0,2 | 1,0 | −110 | −340 | 230 |
| 2 | 90 | 10 | 2,50 | 0,4 | 1,9 | −120 | −330 | 210 |
| 3 | 80 | 20 | 2,50 | 0,6 | 2,3 | −160 | −270 | 110 |
| 4 | 67 | 33 | 2,48 | 0,4 | 2,1 | −160 | −270 | 110 |
| 5 | 33 | 67 | 2,52 | 0,7 | 3,0 | −170 | −250 | 80 |
| 6 | 20 | 80 | 2,50 | 1,0 | 3,2 | −150 | −210 | 60 |
| 7 | 10 | 90 | 2,54 | 0,7 | 3,4 | −140 | −190 | 50 |
| 8 | 5 | 95 | 2,51 | 1,3 | 3,6 | −150 | −230 | 80 |
| 9 | 0 | 100 | 2,51 | 1,8 | 4,6 | −150 | −270 | 120 |

# 0 030 229

## Revendications

1. Film orienté biaxialement constitué d'un mélange comprenant moins de 80 % en poids de polypropylène isotactique et plus de 20 % en poids de polybutène-1 isotactique, caractérisé en ce qu'il est revêtu d'une couche de métal obtenue par dépôt sous vide.

2. Film selon la revendication 1, caractérisé en ce que le métal de la couche métallique est choisi parmi l'aluminium et le zinc.

3. Film selon l'une des revendications 1 et 2, caractérisé en ce que son épaisseur est comprise entre 2 et 25 μm (microns).

## Claims

1. A biaxially oriented film made from a mixture comprising less than 80 % by weight of isotactic polypropylene and more than 20 % by weight of isotactic polybutene-1, characterized in that it is coated with a metal layer deposited thereon under vacuum.

2. A film according to claim 1, characterized in that the metal of the metal layer is selected from aluminium and zinc.

3. A film according to any of claims 1 and 2, characterized in that its thickness is between 2 and 25 μm (microns).

## Ansprüche

1. Ein biaxial ausgerichtet Film, der ausgehend von einem Gemisch hergestellt ist, das weniger als 80 Gew.% isotaktisches Polypropylen und mehr als 20 Gew.% isotaktisches Polybuten-1 enthält, dadurch gekennzeichnet, daß er mit einer metallischen Schicht bedeckt ist, die im Vakuum auf dem Film abgescheidet ist.

2. Ein Film nach dem Anspruch 1, dadurch gekennzeichnet daß das Metall der metallischen Schicht unter dem Aluminium und dem Zink gewählt ist.

3. Ein film nach den Ansprüchen 1 und 2, dadurch gekennzeichnet, daß seine Dicke zwischen 2 und 25 μm (Mikrons) liegt.